Europäisches Patentamt

European Patent Office

Office européen des brevets

(11) Veröffentlichungsnummer: **0 262 596**
A2

(12) # EUROPÄISCHE PATENTANMELDUNG

(21) Anmeldenummer: 87114003.4

(22) Anmeldetag: 25.09.87

(51) Int. Cl.⁴: **B01D 27/06**

(30) Priorität: 02.10.86 GR 862488

(43) Veröffentlichungstag der Anmeldung:
06.04.88 Patentblatt 88/14

(84) Benannte Vertragsstaaten:
AT BE CH DE ES FR GB GR IT LI LU NL SE

(71) Anmelder: Siabanis, Dimitrios
Konstantinoupoleos Strasse 1 Kalamaria
GR-551-33 Thessaloniki(GR)

(72) Erfinder: Siabanis, Dimitrios
Konstantinoupoleos Strasse 1 Kalamaria
GR-551-33 Thessaloniki(GR)

(74) Vertreter: Fischer, Wolf-Dieter, Dipl.-Ing.
Kurfürstenstrasse 32
D-6700 Ludwigshafen/Rhein(DE)

(54) **Ölfilter.**

(57) Der Ölfilter besitzt eine um einen inneren Kern 3 aus einer Papierbahn oder Vlies gewickelte Filterpackung 4, die außen von dem Gehäuse 1 gehalten wird. Das über ein inneres Zuleitungsrohr 9 zugeführte Öl wird zwischen den Lagen parallel zur Filterachse 16 durch das Filtermaterial durchgeleitet, wobei der Raum zwischen dem Gehäuse 1 und dem Innenrohr 3 rund, oval oder mehreckig ausgebildet sein kann. Als Filtermaterial ist aus Cellulose, modifizierter Cellulose, öl-und wasserunlöslichen und nichtquellenden Kunststoffasern, Glasfasern, Kohlefasern und dergleichen bestehendes Material vorgesehen.

*Fig. 1*

EP 0 262 596 A2

## Ölfilter

Die Erfindung betrifft einen Ölfilter für Mineralöle mit einem Filtergehäuse, in dem in einer von dem Öl durchströmten Kammer eine Filterpapier- bzw. Vlies-Packung angeordnet ist.

Das für die Schmierung bei Verbrennungskraftmotoren von Kraftfahrzeugen jeglicher Art verwendete Mineralöl wird über Reinigungsfilter geleitet,die die sich bildenden Verunreinigungen, wie Eisenspäne, kolloidaler Kohlenstoff und dergleichen ausfiltern, um die Qualität des Öls, d.h. seine Schmierfähigkeit möglichst lange zu erhalten. Bekannt sind hierbei die verschiedensten Ausführungsformen solcher Filter, wobei Papierfilter oder Faserfilter verwendet werden, die mit Filtereinsätzen aus Spezialpapier bzw. -pappe versehen sind. Der Nachteil dieser bekannten Filter besteht insbesondere darin, daß die die Qualität des Öls vermindernden Verunreinigungen wie kolloidaler Kohlenstoff nur ungenügend ausgefiltert werden, so daß das Öl frühzeitig durch neues Öl ersetzt werden muß. Hierbei muß auch der wabenartige Filtereinsatz erneuert werden.

Der Erfindung liegt die Aufgabe zugrunde, einen derartigen Filter so auszubilden, daß durch eine verbesserte Filterwirkung die die Schmierfähigkeit des Öls vermindernden Bestandteile ausgefiltert werden, so daß die Lebensdauer und Verwendungsmöglichkeit des Öls um ein mehrfaches verlängert und verbessert werden kann.

Diese Aufgabe wird nach der Erfindung dadurch gelöst, daß das Filtermaterial aus Cellulose, modifizierter Cellulose, öl-und wasserunlöslichen und nichtquellenden Kunststoffasern, Glasfasern, Kohlefasern und dergleichen, frei von öllöslichen Bindemitteln und Füllstoffen, besteht und daß die Filterpackung aus übereinandergewickelten Lagen besteht und das zu reinigende Öl parallel zur Wickelachse zwischen den Lagen durchströmt.

Eine vorteilhafte Ausführungsform besteht darin, daß das Flächengewicht des Filtermaterials etwa 10 bis 20 g/m², die Papierdicke etwa 0,1 bis 0,5 mm und auf eine Querschnittsfläche im Filter von etwa 60 bis 70 cm² etwa 65 m Filtermaterial gewickelt sind.

Es ist vorteilhaft, daß das Filtermaterial aus etwa 50 % Cellulose und 50 % Füllstoffen besteht.

Weiterhin wird vorgeschlagen, daß das Filtermaterial an seiner Oberfläche rauh genoppt ist.

Eine vorteilhafte Ausführungsform des Ölfilters besteht darin, daß ein zentrales Zuleitungsrohr vorgesehen ist, das von der Filterpackung umgeben ist.

Weiterhin ist es vorteilhaft, daß am unteren Ende des Zuleitungsrohres der Ölaustritt in einen Sammelraum vorgesehen ist, daß die Filterpackung zwischen einem Innen-und Außenrohr angeordnet ist, die oben durch einen Filterdeckel mit Ölauslaß verschlossen sind.

Es ist vorteilhaft, daß die Filterpackung ohne Innenrohr im Gehäuse angeordnet ist und der Ölzulauf an der einen Seite und der Ölablauf an der gegenüberliegenden Seite vorgesehen sind. Eine vorteilhafte Anordnung des Ölfilters sieht vor, daß der Ölfilter in einer Bypass-Leitung zu einem herkömmlichen Ölfilter angeordnet ist.

Ein vorteilhaftes Verfahren zum Entfernen von Verunreinigungen und Schadstoffen, insbesondere kolloidalem Kohlenstoff aus Mineralölen unter Verwendung eines Filters besteht darin, daß das Öl zwischen den übereinandergewickelten Lagen der Filterpackung in Richtung der Filterachse geleitet wird, wobei als Filtermaterial Cellulose, modifizierte Cellulose, öl-und wasserunlösliche und nichtquellende Kunststoffasern, Glasfasern, Kohlefasern und dergleichen verwendet werden.

Es hat sich überraschend gezeigt, daß durch die erfindungsgemäße Ausbildung eines derartigen Ölfilters die Lebensdauer des Mineralöls, das bei Kraftfahrzeugen zur Schmierung der Motoren gebraucht wird, erheblich verlängert werden kann. Der Ölfilter kann so ausgestaltet sein, daß der Filter in Form von Filterpatronen in das Gehäuse eingesetzt und diese Filterpatronen in bestimmten Abständen ausgewechselt werden.

Die Erfindung wird in der nachfolgenden Beschreibung anhand eines in den Zeichnungen dargestellten Ausführungsbeispiels näher erläutert.

Es zeigen,

Fig. 1 einen Längsschnitt durch eine derartige Ausführungsform eines Ölfilters,

Fig. 2 eine Seitenansicht von Fig. 1, teilweise geschnitten,

Fig. 3 eine Draufsicht auf ein derartiges Filter gemäß Figur 1 und

Fig. 4 ein Schaltungsdiagramm für die Anordnung eines derartigen Ölfilters.

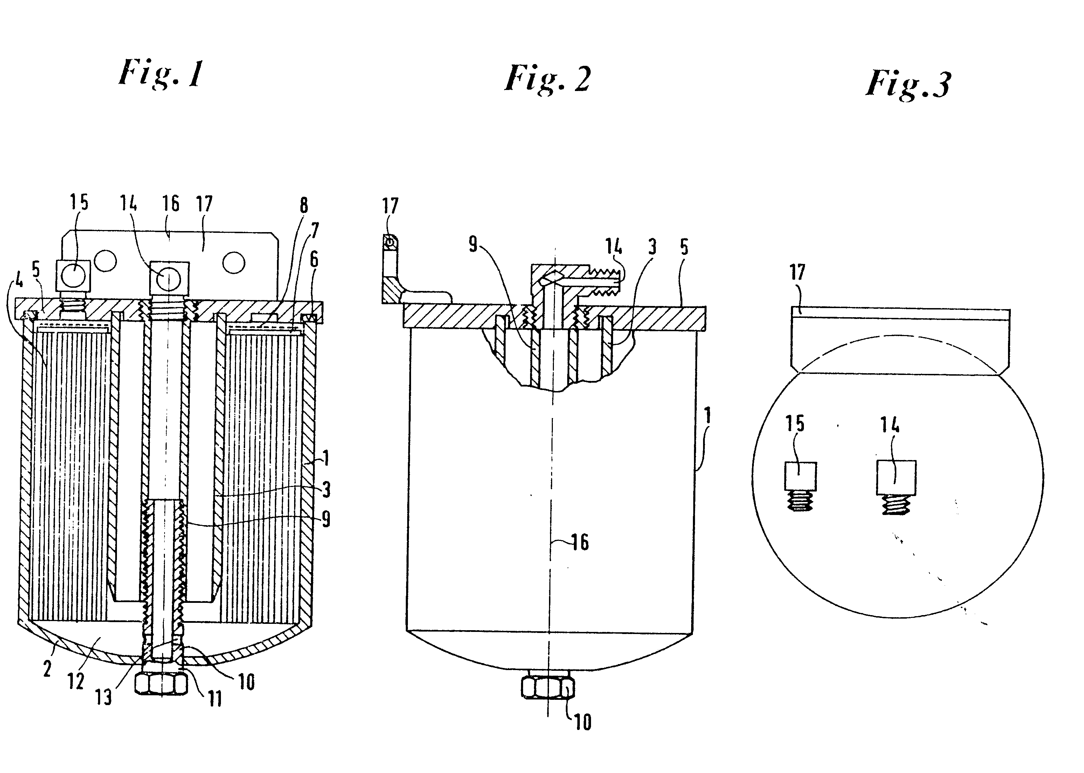

Die in den Figuren 1 bis 3 gezeigte Ausführungsform des Ölfilters besitzt ein zylindrischen Außengehäuse 1, das unten durch einen nach außen hin gewölbten Deckel 2 verschlossen ist. Innerhalb dieses Gehäuses 1 befindet sich ein Winkelrohr 3, wobei in dem Ringraum zwischen dem Gehäuse 1 und dem Rohr 3 die Filterpackung 4 angeordnet ist. Auf das Gehäuse 1 ist ein Filterdeckel 5 aufgesetzt, der mittels einer Dichtung 6 abgedichtet ist. Zwischen dem Deckel 5 und dem oberen Ende der Filterpackung 4 ist ein Filzring 7 sowie ein feinmaschiges Metallgitter 8 angeordnet. Koachsial zum inneren Rohr 3 befindet sich ein Zulaufrohr 9, in das von unten her eine Hohlschraube 10 an einer Dichtung 11 abgedichtet, eingeschraubt ist. In dem unteren Sammelraum 12 besitzt die Schraube eine Verbindungsbohrung 13, so daß über den am Deckel angebrachten Öleinlaß 14 das Öl unten im Bereich des Sammelraumes 12 austreten kann. Am Filterdeckel 5 befindet sich im Bereich der Filterpackung 4 ein Ölauslaß 15.

Die Filterpackung 4 ist in dem Raum zwischen dem Innenrohr 3 und dem Gehäuse 1 um das Innenrohr 3 als Wickelkern gewickelt, so daß das bei 14 eintretende und bei 13 austretende Öl von unten nach oben zwischen den einzelnen Lagen, d.h. parallel zur Filterachse 16 nach oben strömt und bei 15 austritt. Seitlich am Deckel befindet sich noch ein Befestigungswinkel 17. Die Filterpackung 4 kann in dem Gehäuse 1 auch ohne Innenrohr 3 gewickelt sein, d.h. sie füllt den Raum des Gehäuses 1 vollständig aus. Der Ölzulauf erfolgt dann an der einen Stirnseite und der Ölablauf an der gegenüberliegenden Seite.

Als Filtermaterial ist ein Papiermaterial oder Vlies vorgesehen, das aus Cellulose, modifizierter Cellulose, aus öl-und wasserunlöslichen und nichtquellenden Kunststoffasern, aus Glasfasern, aus Kohlefasern und dergleichen besteht. Es dürfen nur Bindemittel und Füllstoffe verwendet werden, die öl-und wasserunlöslich sind. Es hat sich hierbei als vorteilhaft erwiesen, ein Papiermaterial von etwa 10 bis 15 g / m² zu verwenden. die Papierdicke beträgt in etwa 0,1 bis 0,5 mm. Bei einem Innendurchmesser der Filterpackung 4 von 40 mm und einem Außendurchmesser von 100 mm sind 65 m eines Papierstreifens mit 0,2 mm Dicke um den Wickelkern 3 zum Herstellen der Filterpackung 4 gewickelt. Gepreßt weist das Papier eine Stärke von 0,07 mm auf. Bei diesem Ausführungsbeispiel ist eine Höhe der Filterpackung 4 von 100 mm gewählt und die Filterpackung 4 wiegt 120 g. Das nicht reißfeste Papier ist an seiner Oberfläche rauh und genoppt.

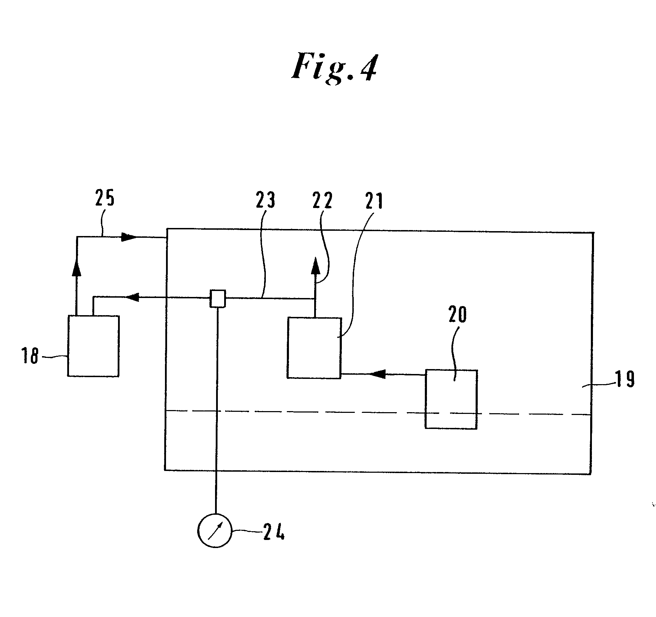

In Figur 4 ist ein Ausführungsbeispiel für die Anordnung des erfindungsgemäßen Ölfilters 18 gezeigt. Der am Motor 19 angeordneten Ölpumpe 20 ist ein herkömmlicher Filter 21 nachgeordnet. Von der zum Motor zurückführenden Leitung 22 ist eine Bypass-Leitung 23 abgezweigt, die einen Teil des Öles über den erfindungsgemäßen Ölfilter 18 leitet. Es hat sich hierbei gezeigt, daß zum Erzielen der angestrebten Wirkung eine Leistung von etwa einem Liter pro Minute ausreichend ist. An die Leitung 23 ist ein Öldruckmesser 24 angeschlossen. Das über den Filter 18 gereinigte Öl wird dann über die Leitung 25 dem Kreislauf beigemischt.

**Ansprüche**

1) Ölfilter für Mineralöle mit einem Filtergehäuse, in dem in einer von dem Öl durchströmten Kammer eine Filterpapier-,bzw. Vlies-Packung angeordnet ist, dadurch gekennzeichnet, daß das Filtermaterial aus Cellulose, modifizierter Cellulose, öl-und wasserunlöslichen und nichtquellenden Kunststofffasern, Glasfasern, Kohlefasern und dgl., frei von öllöslichen Bindemitteln und Füllstoffen, besteht, und daß die Filterpackung (4) aus übereinandergewickelten Lagen besteht und das zu reinigende Öl parallel zur Wickelachse (16) zwischen den Lagen durchströmt.

2) Ölfilter nach Anspruch 1, dadurch gekennzeichnet, daß das Flächengewicht des Filtermaterials etwa 10 bis 20 g/m², die Papierdicke etwa 0,1 bis 0,5 mm und auf eine Querschnittsfläche im Filter von etwa 60 bis 70 cm² etwa 65 m Filtermaterial gewickelt sind.

3) Ölfilter nach Anspruch 1 und 2, dadurch gekennzeichnet, daß das Filtermaterial aus etwa 50 % Cellulose und 50 % Füllstoffen besteht.

4) Ölfilter nach Anspruch 1 bis 3, dadurch gekennzeichnet, daß das Filtermaterial an seiner Oberfläche rauh genoppt ist.

5) Ölfilter nach Anspruch 1 bis 4, dadurch gekennzeichnet, daß ein zentrales Zuleitungsrohr (9) vorgesehen ist, das von der Filterpackung (4) umgeben ist.

6) Ölfilter nach Anspruch 5, dadurch gekennzeichnet, daß am unteren Ende des Zuleitungsrohres (9) der Ölaustritt (13) in einen Sammelraum (12) vorgesehen ist, daß die Filterpackung (4) zwischen einem Innen-und Außenrohr (1,3) angeordnet ist, die oben durch einen Filterdeckel (5) mit Ölauslaß (15) verschlossen sind.

7) Ölfilter nach einem der Ansprüche 1 bis 6, dadurch gekennzeichnet, daß die Filterpackung (4) ohne Innenrohr (3) im Gehäuse (1) angeordnet ist und der Ölzulauf an der einen Seite und der Ölablauf an der gegenüberliegenden Seite vorgesehen sind.

8) Ölfilteranordnung nach Anspruch 1 bis 7, dadurch gekennzeichnet, daß der Ölfilter (18) in einer Bypass-Leitung (23) zu einem herkömmlichen Ölfilter (21) angeordnet ist.

9) Verfahren zum Entfernen von Verunreinigungen und Schadstoffen, insbesondere kolloidalem Kohlenstoff aus Mineralölen unter Verwendung eines Filters nach einem der Ansprüche 1 bis 8, dadurch gekennzeichnet, daß das Öl zwischen den übereinandergewickelten Lagen der Filterpackung in Richtung der Filterachse geleitet wird, wobei als Filtermaterial Cellulose, modifizierte Cellulose, öl-und wasserunlösliche und nichtquellende Kunststoffasern, Glasfasern, Kohlefasern und dergleichen verwendet werden.

*Fig. 1*

*Fig. 2*

*Fig. 3*

0 262 596

# Fig.4

0 262 596